## Europäisches Patentamt

## European Patent Office

## Office européen des brevets

(11) Publication number: **0 047 039**
**B1**

(12) **EUROPEAN PATENT SPECIFICATION**

(45) Date of publication of patent specification: **07.08.85**

(21) Application number: **81200946.2**

(22) Date of filing: **27.08.81**

(51) Int. Cl.⁴: **C 08 L 23/00, B 63 B 5/24, A 63 C 15/00**

(54) **Polyolefin powder compositions, in particular polyethylene powder compositions, with improved adhesion, and objects made or to be made of such compositions.**

(30) Priority: **30.08.80 NL 8004958**

(43) Date of publication of application:
**10.03.82 Bulletin 82/10**

(45) Publication of the grant of the patent:
**07.08.85 Bulletin 85/32**

(84) Designated Contracting States:
**AT BE CH DE FR GB IT LI NL SE**

(56) References cited:
**EP-A-0 021 533**
**GB-A-1 446 258**
**GB-A-1 494 897**
**US-A-3 929 550**

(73) Proprietor: **STAMICARBON B.V.**
**Postbus 10**
**NL-6160 MC Geleen (NL)**

(72) Inventor: **Peerlkamp, Erik Rijkele**
**Klein Holtum 39**
**NL-6121 EG Born (NL)**

(74) Representative: **De Boer, Jan et al**
**OCTROOIBUREAU DSM Postbus 9**
**NL-6160 MA Geleen (NL)**

Courier Press, Leamington Spa, England.

# Description

The invention relates to compositions of polyolefin powders, in particular polyethylene powders, with improved adhesion, and to objects made or to be made of such compositions.

Because of their structure, polyolefin plastics are more or less inert. Of the polyolefins produced on a very large scale, polyethylene and polypropylene, polyethylene is the more inert. Therefore it is difficult or impossible to bond. It adheres hardly or not at all to a substrate, e.g. metal surfaces, foamed plastics, etc. To make polyethylene adhere to a substrate use has to be made of an adhesive, or it is necessary to etch the surface of the polyethylene or the substrate. However, the use of adhesives effects only a limited degree of adhesion, as a result of the poor bonding properties of polyethylene, and moreover requires an extra treatment, which increases the cost price. Etching of one or both surfaces to be bonded together is a laborious treatment, which, like the application of adhesives, lengthens production time and increases the cost price. Difficulties of the same kind are encountered also with polypropylene.

It is known that objects can be made from plastics by heating powders in a mould. The powder melts on the hot wall and forms a layer. The surfaces of the objects to be made may be formed by a single layer, but also by several layers. Foam structures between layers or against a layer may be applied to improve insulating properties or to limit the weight of the objects. The surface layer and the foamed or unfoamed layer in contact with it should adhere to each other. With polyethylene in particular, but also with polypropylene, the adhesion leaves much to be desired. This problem is met with in particular in the manufacture of surf-boards, which are mostly made by rotational moulding to form a wall of polyethylene, in particular of polyethylene having high or medium density, i.e. a density of at least 0.930, although it is also possible to use a polyethylene of lower density. In between the surface layers the mould is filled with a polyurethane foam. During use, the polyethylene wall may get damaged, after which water can penetrate into the foam. If there is good adhesion between wall and foam, damage is less likely to occur. Also, in this case water can penetrate into the foam only under the damaged spot, whereas if adhesion is poor, water can distribute between wall and foam and can thus be absorbed by all of the foam. Good adhesion is highly desirable for surf-board in particular, but also for other objects built up of similar components, and a need for such good adhesion is consequently felt everywhere.

U.S. Patent No. 3,639,189 proposes to improve the adhesion of polyethylene to metal substrates by blending the polyethylene with oxidized polyethylene. The oxidized polyethylene is obtained by heating polyethylene in an oxygen atmosphere at temperatures that may range from 90°C up to the crystalline melting point of the polyethylene until the desired oxygenation has been reached. Next, the polyethylene is melt-blended with the oxidized polyethylene, and granulated. The granulate thus obtained is used for the layers to be applied to a metal substrate. The oxidation of the polyethylene is a laborious process and increases the cost price of the composition to be used as starting material in the production of objects. A composition of this kind is less suited for the manufacture of, say, surf-boards, because oxidized polyethylene lowers the resistance of the polyethylene composition to atmospheric influences. Notably the resistance to thermal and oxidative attack is lowered, which in particular for an outer wall, such as the polyethylene coating of a surf-board, which is exposed to outdoor atmospheric influences, is highly undesirable. This drawback might admittedly be obviated by including more stabilizers in the polyethylene composition, but this, again, raises the cost price. Moreover, the use of compositions containing oxidized polyethylene in the manufacutre of objects in a mould by, for instance, rotational moulding, has the disadvantage that compositions of this kind adhere also to the mould. Even if use is made of non-oxidized polyethylene it is necessary to apply release agents in order to facilitate the release of the polyethylene object from the mould, but when use is made of oxidized polyethylene difficulties are still encountered in removing the object from the mould even if release agents are applied.

It has already been attempted to improve properties as well as adhesion by applying a cross-linked polyolefin, by preference cross-linked polyethylene, or by cross-linking the polyethylene after it has been formed into a surface layer. Improvement of the adhesion proved possible, but there remains a disadvantage in that damage to the surface layer is difficult or impossible to repair.

It has now been found that improved adhesion of polyolefins, in particular polyethylene, to a substrate, e.g. another plastic, in particular polyurethane foam, can be obtained without polyethylene or another polyolefin adhering strongly to the mould wall during the moulding process, by making use of a polyolefin composition which—and this characterizes the invention—consists to 20—99.5% by weight of a stabilized polyolefin powder and to 0.5—80 wt. of an unstabilized or little stabilized polyolefin poweder with a crystalline melting point that is at least 1°C higher than that of the stabilized polyoelfin. By preference the crystalline melting point of the unstabilized or little stabilized component is at least 4°C higher than that of the stabilized component.

The compositions according to the invention are particularly suited for rotational moulding, and the invention will be explained with reference to this technique; but the possibility of application are not restricted to rotational moulding. Surface layers made of the compositions according to the invention can easily be repaired by melt-welding when they have got damaged.

So-called rotational moulding is a procedure in which a quantity of a synthetic thermoplastic is introduced into a mould that can rotate and/or rock about one or more axes. The mould is meanwhile heated to above the melting point of the plastic, and the rotational or rocking motion evenly distributes the powder over the mould surface.

By introducing another quantity of the same or a different plastic or plastic composition into the mould, a number of layers can be formed, if so desired. The space within the plastic wall formed in one or more layers against the mould wall can be filled out with foam, e.g. polyurethane foam. The foam should adhere to the outside layer, but the whole should be readily released by the mould. The compositions according to the invention satisfy these requirements.

The polyolefin compositions according to the invention are by preference polyethylene compositions. Composition of polyethylene with unstabilized or little stabilized polypropylene or polypropylene compositions can also be used. Of the polymers of other olefins only the polyisobutylenes have commercial importance. These are elastomers, mostly marketed in modified form, whose main applications are in other fields. Further, limited amounts of polybutylene and poly-4-methylpentene-1 are sold on the market. These polymers are also covered by the invention. By the side of homopolymers, many copolymers are produced. To what extent these are suitable for rotational moulding depends on their composition. It is possible, for instance, in the case of polyethylene to lower the melting point by copolymerizing ethylene with small amounts of one or more other olefins. Of the components of a composition, therefore, the stabilized component is preferably a copolymer of ethylene, whereas the non-stabilized component is a homopolymer or a copolymer of ethylene with a lower comonomer content, so that its crystalline melting point is at least 1°C and preferably at least 4°C higher than that of the stabilized component. The invention will be further elucidated with reference to polyethylene, but as appears from the foregoing it is not restricted to the use of this polyolefin.

In general, polyethylene is marketed in the form of granules. For applications such as rotational moulding it has to be used in powder form, however. The particle size of such powders is below 2 mm, preferably below 1 mm. More in particular, such powders have a particle size in the order of 0.5 mm, e.g. 0.3—0.6 mm. In most cases the powders are prepared by grinding of a granulate. Polyethylene comes available in the form of a powder, admittedly, if the polymerization is carried out in a so-called suspension process or a gas-phase process, but the morphological and rheological properties of powders so obtained are generally poor.

Therefore they are mostly first granulated and next ground.

The processing of polyethylene, in particular high-density polyethylene, takes place at temperatures above 140°C, and for this reason the granulate is stabilized for protection from thermal breakdown. The polyethylene is also stabilized for protection from oxidative attack and from the influence of light, in particular UV radiation, with a view to rendering objects made of the polyethylene resistant to atmospheric influences. Stabilization against oxidative modification is also necessary to prevent rapid attack when the polymer comes into contact with oxygen, e.g. air oxygen, during processing. In many cases small amounts of stabilizers giving protection from thermal and oxidative modification are added to ethylene after polymerization, to protect the polymer during further processing. During the granulation at the end of the processing operation further amounts of stabilizers are added. If this addition is omitted, a non-stabilized or hardly stabilized polyethylene is obtained, i.e. a polymer that contains at any rate less than 0.01 % wt., more in particular less than 0.005 % wt., stabilizing agents.

If now such a polyethylene, not or little stabilized, is used for making objects in a mould, for instance by rotational moulding, oxidative modifications will occur wherever the polyethylene gets into contact with air at elevated temperature. In most cases air is present in the mould, and when the mould is heated this will result in a noticeable oxidative modification of the polyethylene, such as oxidation, whether or not accompanied by chain break-down, cross-linking, etc. This gives the polyethylene improved adhesion.

The presence of stabilizers results in the polyethylene being left unoxidized or hardly noticeably oxidized under the processing conditions. The effect of the invention is brought about by the presence of oxidized groups in the polyethylene, which groups should be capable of forming in the unstabilized or little stabilized component during processing. This can easily be demonstrated by means of infra-red analysis. It can be established unequivocally by forming each component separately into a layer under the normal processing conditions, and then subjecting these layers to infra-red analysis. The unstabilized or little stabilized polyethylene then shows a clearly visible band at 1650—1800 cm$^{-1}$, which is indicative of C=0 bonds. The stabilized polyethylene should not, or hardly, show such a band, if it is to keep its good mechanical properties.

If a polyurethane foam is introduced into a skin made of an unstabilized or little stabilized polyethylene, adhesion is found to be so strong that attempts to sever the polyethylene from the polyurethane foam results in rupturing of the foam, not at the surface layer. An unstabilized or little stabilized polyethylene admittedly adheres strongly to the polyurethane foam or to other substrates, but, in the first place, such a layer has insufficient resistance to atmospheric influences, so that objects made of it will weather in an unacceptably short time, and, secondly, such a layer adheres also to the wall of the mould. In spite of the use of release agents, it proves difficult to remove the object from the mould.

The use of the compositions according to the invention results in good adhesion to the substrate, with retention of the ease with which release from the mould wall is effected, and a coating made of such compositions is resistant to weathering. Although this is not to be regarded as a statement binding the applicant in any respect, it is assumed that if a polyethylene composition according to the invention is processed to a layer or a wall, for instance by rotational moulding, a thin section of that layer, which is in immediate contact with the mould wall, consists in whole or largely of the stabilized polyethylene in which during molding little or no oxidation as occurred. When the wall of the mould is heated the stabilized component, having a lower crystalline melting point than the unstabilized or little stabilized component, will start to melt first, and form a very thin layer in contact with the mould wall. The particles of the unstabilized component, which have a higher melting point, may, admittedly, stick to the melting particles of the stabilized component and then melt in their turn as the temperature rises further, thus making the separation between stabilized and unstabilized polyethylene incomplete, but the formation of the very thin external layer consisting almost entirely of stabilized polyethylene already ensures that the objective set will be realized. The unstabilized or little stabilized polyethylene will be slightly oxidized, and this oxidized polyethylene is at any rate in contact with the inner surface of the resultant layer, which has longest been in contact with air at elevated temperature. This surface will now show good adhesion to substrates to which it is applied.

Infra-red analysis of a layer made by rotational moulding of a composition according to the invention very clearly showed the presence of C=0 groups on the inner side of the wall. This was revealed by the occurrence of a band at 1650—1800 cm$^{-1}$, whereas the outer side of the wall did not show a band at 1650—1800 cm$^{-1}$. It may be concluded that the inner wall has been oxidized, whereas on the outer wall at most an insignificant degree of oxidation can have taken place. Some oxidation of the outer wall cannot always be excluded. In some cases this results in the occurrence of a very weak band at 1650—1800 cm$^{-1}$. Although some oxidation is permissible, it should be kept as limited as possible.

When a composition according to the invention is subjected to rotational moulding it is necessary on the one hand that such a degree of oxidation occurs as will ensure good adhesion to the substrate, but on the other hand that the oxidation is not carried so far that release from the mould can give rise to difficulties, and/or that stabilization can present problems. These are the points which have to be taken into account when deciding how much unstabilized component will be used. Less than 0.5% wt. has hardly any effect at all, and over 80% wt. is likewise undesirable. By preference the compositions according to the invention contain 10—30% wt. unstabilized polyolefin, in particular 10—30% wt. unstabilized or little stabilized polyethylene, with the stabilized component being by preference polyethylene containing a minor quantity of another olefin polymerized together with this polyethylene.

During the processing of a composition according to the invention, for instance by rotational moulding, migration of stabilizing agents occurs. Insofar as this does not alreay result in a homogeneous distribution, such distribution will be reached in course of time, as migration continues, albeit slowly, at ambient temperature. There is not any objection against storage of the powder mixture for some time, up to e.g. 6 months. The layer of polyethylene will then end up being uniformly stabilized and resistant to atmospheric influences. If this situation is to be reached, it is, of course, necessary that the polyethylene composition should contain a sufficient quantity of stabilizing agents. This is to be taken into account in the preparation of the components. Provisions of this kind are outside the scope of the invention, as also compositions that in their entirety are slightly under-stabilized show improved adhesion to substrates within the scope of the invention.

In general, stabilized polyethylene contains at least 0.01% wt. stabilizing agents, and, in total, in most cases at least 0.025% wt. The amounts of stabilizing agents incorporated in the polyethylene are determined by the stability desired. In most cases more than one stabilizing agent is added, because stabilization against various effects is desired, and also because many combinations of stabilizing agents bring synergetic effects.

Like most macromolecular substances, polyethylene has no sharply defined melting point. By means of Differential Scanning Calorimetry (in most cases indicated by DSC) a temperature-enthalpy curve is obtained. In the so-called melting of polyethylene a DSC curve with a distinct peak is obtained. The temperature at which the maximum in the melting range occurs with a heating rate of 5°C/min is here called the crystalline melting point.

Each component in the compositions according to the invention may itself also be composed of two or more polyolefins. For polyethylene compositions use may be made of low-density as well as of high-density material, but polyethylene with a density of at least 0.930 is in general preferred. Low-density polyethylene has a considerably lower melting point than high-density polyethylene. The melting range of low-density polyethylene usually runs from 108 to 112°C, that of high-density polyethylene (homopolymer) from 131 to 137°C. Copolymers have a lower density value and a lower melting point.

The compositions according to the invention, and notably the components of which they are made up, may contain normally used additives, such as colourants, fillers, etc.

The invention will be further elucidated in the following examples, without being restricted thereto.

Example I

80 parts by weight of a powdery polyethylene having a melt index (ASTM D-1238, condition E) of 4.5, a density of 0.938, and a mean particle size of 450 µm, which has been stabilized with 0.25 %wt. 2 - hydroxy - 4 - n - octoxy - benzophenone (UV stabilizer) and 0.05 %wt. octadecyl - 3 - (3,5 - di - tert . butyl - 4 - hydroxyphenyl)propionate (thermal stabilizer and anti-oxidant) was mixed with 20 parts wt. of powdery polyethylene having a melt index of 8, a density of 0.963, and a mean particle size of 450 µm, which contained only 0.004 %wt. of the octadecyl - 3 - (3,5 - di - tert . butyl - 4 - hydroxyphenyl)propionate. The latter component will hereinafter be referred to as the unstabilized component. The crystalline melting temperature of the stabilized component (peak temperature in DSC, heating rate 5°C/min) was 126°C, that of the unstabilized component 133°C.

A hollow shape was produced of the thoroughly mixed product by rotational moulding. The maximum mould temperature was about 275°C, the rotation time was 15 min. Next, polyurethane was foamed inside the hollow shape. Thereafter, sections with a surface area of 5×6 cm were cut from the resultant object, so that blocks of polyurethane foam covered on two sides with a polyethylene coating were obtained. These blocks were subjected to a tensile test in which an elongation rate of 1 cm/min was applied.

The strength of the bond between thwypolyethylene and the polyurethane could not be established, as the polyurethane ruptured, but it was at least 0.260 M/mm².

Comparative Example A

Example I was repeated with only the stabilized component. Determination of the bonding strength presented difficulties, as the polyethylene coating began to come loose already when the blocks of polyurethane foam were being clamped in the machine. In the tensile test the polyethylene came clear of the foam already before a measurable value could be recorded. The plane of separation was clean, with no polyurethane foam adhering to the polyethylene.

Comparative Example B

Example I was repeated with only the unstabilized component. Released from the mould was attended with difficulties, but succeeded in the end. The strength of the bond with the polyurethane foam was at least 0.270 N/mm². In the tensile test the polyurethane foam ruptured.

Example II

90 parts by weight of powdery polyethylene having a melt index (ASTM D 1238) of 4.5, a density of 0.938, and a mean particle size of 450 µm, stabilized with 0.25 %wt. 2 - hydroxy - 4 - n - octoxy - benzophenone (UV stabilizer) and 0.05 %wt. octadecyl - 3 - (3,5 - di - tert . butyl - 4 - hydroxyphenyl)propionate (thermal stabilizer and anti-oxidant), was mixed with 10 parts wt. of powdery polypropylene having a melt index (ASTM D-1238, condition L) of 10, a density of 0.910, and a mean particle size of 400 m, which had not been stabilized. This mixture was then used to produce a hollow object in the manner described in Example I. In a tensile test as described in Example I again rupturing of the foam occurred when the tensile force rose above 0.260 N/mm².

**Claims**

1. Polyolefin composition with improved adhesion to substrates, consisting of 20—99.5% by weight of a stabilized polyolefin powder and of 0.5—80% wt. of an unstabilized or little stabilized polyolefin powder characterized in that the unstabilized or little stabilized polyolefin has a crystalline melting point that is at least 1°C higher than that of the stabilized polyolefin.

2. Polyethylene composition with improved adhesion to a substrate, consisting of 20—99.5% wt. of a stabilized polyethylene powder and of 0.5—80% wt. of an unstabilized or little stabilized polyethylene powder characterized in that the unstabilized or little stabilized polyethylene has a crystalline melting point that is at least 1°C higher than that of the stabilized polyethylene.

3. Polyethylene composition according to claim 2 with improved adhesion to a substrate upon processing by moulding in a hollow mould and application of a substrate in the hollow shape, characterized in that the stabilized polyethylene component is not oxidized and the unstabilized or little stabilized polyethylene component is oxidized under the conditions obtained during processing.

4. Polyolefin composition according to claim 1, consisting of 70—90% wt. of stabilized polyolefin powder and of 10—30% wt. of unstabilized or little stabilized polyolefin powder.

5. Polyethylene composition according to claims 1—3, consisting of 70—90% wt. of stabilized polyethylene powder and of 10—30% wt. of unstabilized or little stabilized polyethylene powder.

6. Polyolefin composition according to claims 1—5, characterized in that the crystalline melting point of the unstabilized, or oxidizable, component is at least 4°C higher than that of the stabilized, or non-oxidizable component.

7. Process of producing, by rotational moulding, a wall of a polyolefin within which a plastic foam, in particular a polyurethane foam, is provided, with improved adhesion, this process being characterized in that the wall is made of a powder composition according to one or more of the claims 1—6.

8. Object, in particular a surf-board, consisting of a wall made of a polyolefin in accordance with claims 1 to 6, by preference polyethylene, to the inside of which wall a plastic substrate has been applied, the object being characterized in that on the inside of the polyolefin wall oxidation has taken place whereas on the outside no or hardly any oxidation has taken place.

**Revendications**

1. Composition polyoléfinique à adhérence renforcée vis-à-vis de substrats, caractérisée en ce qu'elle contient 20—99,5% enpoids d'une poudre de polyoléfine stabilisée et 0,5—80% en poids d'une poudre de polyoléfine non-stabilisée ou faiblement stabiliée ayant un point de fusion cristallin d'au moins 1°C supérieur à celui de la polyoléfine stabilisée.

2. Composition polyéthylénique à adhérence renforcée vis-à-vis d'un substrat, caractérisée en ce qu'elle contient 20—99,5% en poids d'une poudre de polyéthylène stabilisée et 0,5—80% en poids d'une poudre de polyéthylène non-stabilisée ou faiblement stabilisée ayant un point de fusion cristallin d'au moins 1°C supérieur à celui du polyéthylène stabilisé.

3. Composition polyéthylénique selon la revendication 2, à adhérence renforcée vis-à-vis d'un substrat lors d'un traitement par moulage dans un moule creux et application d'un substrat à l'intérieur de la forme creuase, composition caractérisée en ce que le constituant polyéthyléne stabilisé n'est pas oxydé, le constituant polyéthylène non-stabilisé ou faiblement stabilisé étant oxydé dans les conditions obtenues pendant la transformation.

4. Composition polyoléfinique selon la revendication 1, caractérisé en ce qu'elle contient 70—90% en poids de poudre de polyoléfine stabilisée et 10—30% en poids de poudre de polyoléfine non-stabilisée ou faiblement stabilisée.

5. Composition polyéthylénique selon l'une quelconque des revendications 1 à 3, caractérisée en ce qu'elle contient 70—90% en poids de poudre de polyéthylène stabilisée et 10—30% en poids de poudre de polyéthylène non-stabilisé ou faiblement stabilisé.

6. Composition polyoléfinique selon l'une quelconque des revendications 1 à 5, caractérisée en ce que le point de fusion cristallin du constituant non-stabilisé, ou oxydable, est d'au moins 4°C supérieur à celui du constituant stabilisé, ou non-oxydable.

7. Procédé de fabrication, par moulage par rotation, d'une paroi en polyoléfine à l'intérieur de laquelle se trouve, avec une adhérence renforcée, une mousse plastique, en particulier une mousse de polyuréthane, procédé caractérisé en ce que la paroi est réalisée en une composition pulvérulente selon l'une quelconque des revendications 1 à 6.

8. Objet, en particulier planche de surfing, consistant en une paroi réalisée en un polyoléfine, selon l'une quelconque des revendications 1 à 6, de préférence le polyéthylène, sur la face intérieure de laquelle a été appliqué un substrat plastique, objet caractérise en ce qu'une oxydation s'est produite sur la face intérieure de la paroi de polyoléfine, tandis qu'aucune oxydation, ou bien seulement une faible oxydation, s'est produite sur la face extérieure.

**Patentansprüche**

1. Polyolefinzusammensetzung mit verbesserter Haftfähigkeit an Substrate, bestehend aus 20—99,5 Gew.-% eines stabilisierten Polyolefinpulvers und 0,5—80 Gew.-% eines unstabilisierten oder wenig stabilisierten Polyolefinpulvers, dadurch gekennzeichnet, daß das unstabilisierte oder wenig stabilisierte Polyolefin einen Kristallinschmelzpunkt hat, der um mindestens 1°C höher ist als derjenige des stabilisierten Polyolefins.

2. Polyäthylenzusammensetzung mit verbesserter Haftfähigkeit an ein Substrat, bestehend aus 20—99,5 Gew.-% eines stabilisierten Polyäthylenpulvers und 0,5—80 Gew.-% eines unstabilisierten oder wenig stabiliserten Polyäthylenpulvers, dadurch gekennzeichnet, daß das unstablisierte oder wenig stabilisierte Polyäthylen einen Kristallinschmelzpunkt hat, der um mindestens 1°C höher ist als derjenige des stabilisierten Polyäthylens.

3. Polyäthylenzusammensetzung nach Anspruch 2 mit verbesserter Haftfähigkeit an ein Substrat nach Verarbeitung durch Formen in einer Hohlform und Einbringen eines Substrats in den Hohlkörper, dadurch gekennzeichnet, daß unter den während der Verarbeitung erhaltenen Bedingungen die stabilisierte Polyäthylenkomponente nicht oxidiert wird und die unstabilisierte oder wenig stabilisierte Polyäthylenkomponente oxidiert wird.

4. Polyolefinzusammensetzung nach Anspruch 1, bestehend aus 70—90 Gew.-% stabilisierten Polyolefinpulver und 10—30 Gew.-% unstabilisiertem oder wenig stabilisierterm Polyolefinpulver.

5. Polyäthylenzusammensetzung nach den Ansprüchen 1—3, bestehend aus 70—90 Gew.-% stabilisiertem Polyäthylenpulver und 10—30 Gew.-% unstabilisiertem oder wenig stabilisiertem Polyäthylenpulver.

6. Polyolefinzusammensetzung nach den Ansprüchen 1—5, dadurch gekennzeichnet, daß der Kristallinschmelzpunkt der unstabilisierten, oder oxidierbaren, Komponente um mindestens 4°C höher ist als derjenige der stabilisierten, oder nicht oxidierbaren Komponente.

7. Verfahren zur Herstellung durch Rotationsformung, einer mit einer Einlage aus einem Kunststoffschaum, insbesondere einem Polyurethanschaum, versehenen Wand aus einem Polyolefin, mit verbesserter Haftfähigkeit, dadurch gekennzeichnet, daß die Wand aus einer Pulverzusammensetzung gemäß einem oder mehreren der Ansprüche 1—6 hergestellt wird.

8. Gegenstand, insbesondere ein Surfbrett, bestehend aus einer Wand aus einem Polyolefin gemäß den Ansprüchen 1 bis 6, vorzugsweise aus Polyäthylen, wobei an die Innenseite dieser Wand ein Kunststoffsubstrat aufgebracht worden war, dadurch gekennzeichnet, daß an der Innenseite der Polyolefinwand Oxidation stattgefunden hatte, während an der Außenseite keine oder kaum eine Oxidation stattgefunden hatte.